(19) Europäisches Patentamt
European Patent Office
Office européen des brevets

(11) **EP 1 172 200 B1**

(12) **EUROPEAN PATENT SPECIFICATION**

(45) Date of publication and mention of the grant of the patent:
**13.06.2007 Bulletin 2007/24**

(51) Int Cl.:
***B32B 1/04*** *(2006.01)*     ***B60R 13/02*** *(2006.01)*
***B60R 13/08*** *(2006.01)*     ***G10K 11/16*** *(2006.01)*

(21) Application number: **01116866.3**

(22) Date of filing: **10.07.2001**

(54) **Ceiling member for automobile interior**

Verkleidungsteil für ein Kraftfahrzeugdach

Elément de garniture intérieure d' un toit de véhicule automobile

(84) Designated Contracting States:
**DE GB**

(30) Priority: **11.07.2000 JP 2000209648**

(43) Date of publication of application:
**16.01.2002 Bulletin 2002/03**

(73) Proprietor: **HONDA GIKEN KOGYO KABUSHIKI KAISHA**
**Minato-ku,**
**Tokyo (JP)**

(72) Inventors:
- **Takahashi, Nobuyuki,**
  **c/o Honda R&D Co., Ltd.**
  **Wako-shi,**
  **Saitama-ken (JP)**
- **Aoki, Osamu,**
  **c/o Honda R&D Co., Ltd.**
  **Wako-shi,**
  **Saitama-ken (JP)**
- **Senoo, Katsuhiro,**
  **c/o Honda R&D Co., Ltd.**
  **Wako-shi,**
  **Saitama-ken (JP)**

(74) Representative: **Ruttensperger, Bernhard et al**
**Weickmann & Weickmann**
**Patentanwälte**
**Postfach 86 08 20**
**81635 München (DE)**

(56) References cited:
**DE-A- 4 126 884**     **GB-A- 2 265 569**
**US-A- 4 630 707**

- **DATABASE WPI Section Ch, Week 199332 Derwent Publications Ltd., London, GB; Class A17, AN 1993-252421 XP002181260 & JP 05 170033 A (SEKISUI CHEM IND CO LTD) , 9 July 1993 (1993-07-09)**
- **DATABASE WPI Section Ch, Week 199212 Derwent Publications Ltd., London, GB; Class A32, AN 1992-091809 XP002181261 & JP 04 034054 A (SEKISUI CHEM IND CO LTD) , 5 February 1992 (1992-02-05)**

**Description**

The present invention relates to a ceiling member for an automobile interior.

Ceiling members for automobile interiors are known in the art. One example of such ceiling members is known from Japanese Utility Model Post-Exam Publication No. HEI 3-46996 entitled "VEHICLE INTERIOR MEMBER".

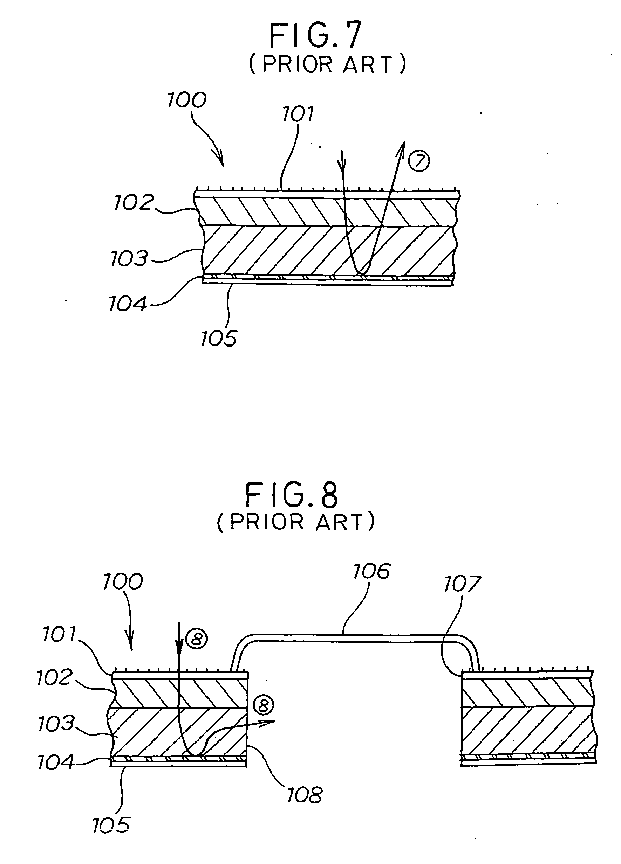

With respect to Fig. 7 and Fig. 8 hereof, there is illustrated a ceiling member 100 as disclosed in the publication. The ceiling member 100 includes a covering material 101 facing towards or exposed to a passenger compartment of an automobile, a ventilative cushioning material 102 laminated to the covering material 101, a ventilative foam 103 lying on the cushioning material 102, a resinous sheet 104 laid on the foam 103, and a lining material 105 applied to the sheet 104. The covering material 101 is made of a ventilative fabric. The cushioning material 102 is formed of polyurethane slab. The foam 103 is made from such a ventilative and sound absorptive material as glass wool. The sheet 104 is formed from an olefin-based material. The sheet 104 prevents sound and air from passing therethrough. The lining material 105 is made of nonwoven fabric which, when rubbed against the interior of an automobile body, produces no noise.

The ceiling member 100 is advantageous because air, which has flowed from within the passenger compartment through the covering material 101 and the cushioning material 102 into the foam 103, is prevented from passing through the resinous sheet 104, as shown by an arrow ⑦ of Fig. 7. In other words, air does not flow through the ceiling member 100. Therefore, no dust or the like clings to the covering 101.

Mounting an interior roof lamp 106 to the interior of the automobile body requires forming an aperture 107 in the ceiling member 100, as shown in Fig. 8. In such a case, however, harmful air could flow through the cushioning material 102 and an end surface 108 of the ceiling member 100, as shown by an arrow ⑧ of Fig. 8. This means that the harmful air undesirably passes through the ceiling member 100. The thus arranged ceiling member 100 fails to exhibit a ventilation characteristic.

A ceiling member for an automobile interior according to the preamble of claim is known from US-A 4,630,707. Form this document there is known a sound absorbing structure for lining the ceiling of a passenger compartment. This structure comprises a substrate of a gas permeable material, which on its side facing towards the interior space of the vehicle is coated by a non-woven fabric which also is gas permeable. Due to this gas permeability this structure acts as an air filter collecting the dust from the air passing through these two material layers into an air chamber provided between this structure and the roof handle of a vehicle. For avoiding this filtering effect, a sheet of gas impermeable material is arranged on the back side of the two gas permeable layers such that there exists no substantial gas flow through the two gas permeable layers.

It is the object of the present invention to provide a ceiling member for an automobile interior providing a decreased air flow through the air permeable region thereof. According to the present invention, this object is obtained by the ceiling member as defined in claim 1.

The unventilated edges of the substrate prevent air from passing there through. There is no longer harmful flow of air through the ceiling member.

In a preferred form of the present invention, the edges are compressed hermetic portions.

In a further preferred form of the present invention, the edges are impregnated with resins.

The unventilated edges are the hermetic portions compressed such that the sound absorption coefficient of the substrate is maintained constant. Thus, the ceiling member maintains the sound absorption coefficient constant.

The ceiling member is molded in such a manner that an edge of the substrate is compressed to provide the hermetic portion.

During the molding of the ceiling member, the edge of the substrate is compressed to thereby provide the hermetic portion, and therefore there is no need for a particular process for compressing the edge of the substrate to provide the hermetic portion. The production cost of the ceiling member is maintained constant.

Certain preferred embodiments of the present invention will be described in greater detail with reference to the accompanying sheets of drawings, in which;

Fig. 1 is a cross-sectional view of a ceiling member for an automobile interior according to the present invention.
Fig. 2A and 2B are views illustrating how the ceiling member of Fig. 1 is made.
Fig. 3 is a perspective view of the ceiling member.
Fig. 4 is a graph showing the sound absorption coefficient of the ceiling member.
Fig. 5A shows a ventilation test apparatus for use in evaluating ventilation characteristics of samples while Fig. 5B and 5C illustrate the samples set within the apparatus of Fig. 5A for evaluation of the ventilation characteristics.
Fig. 6 is a cross-sectional view of an alternative to the ceiling member of Fig. 1.
Fig. 7 is a cross-sectional view of a conventional ceiling member.
Fig. 8 is a cross-sectional view of the ceiling member of Fig. 8 having formed therein an opening for attachment of an interior roof lamp.

The following description is merely exemplary in nature and is in no way intended to limit the invention, its application or uses.

Referring now to drawings in which similar elements are numbered identically throughout, a description of preferred embodiments is provided.

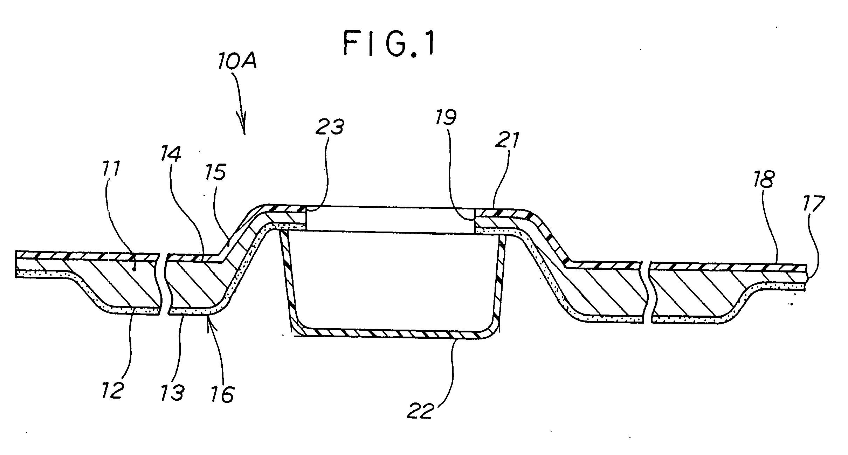

Referring to Fig. 1, a ceiling member 10A for an automobile interior comprises a laminate 16 including a substrate 11, a covering material 13 applied to a surface 12 of the substrate 11, and an unventilated _film 15 applied to a back surface 14 of the substrate 11 positioned opposite from the surface 12. In other words, the substrate 11, the covering material 13, and the unventilated film 15 are laminated together to provide the ceiling member 10A. Formed in the ceiling member 10A is an opening 23 for an interior roof lamp (not shown). An edge 17 of the substrate 11 is rendered unventilated in a manner as will be described later to thereby provide a compressed hermetic portion 18. The substrate 11 also has an unventilated edge 19 defining the opening 23. The unventilated edge 19 is a compressed hermetic portion 21, as is the unventilated edge 17. Reference numeral 22 denotes a cover for the interior roof lamp.

The substrate 11 is both ventilative and sound absorptive. The substrate 11 can be formed of, for example, a mixture of glass fibers and polypropylene resin.

The covering material 13 is ventilative. The covering material 13 can be made of, for example, tricot or nonwoven fabric.

The unventilated film 15 is a resinous film which prevents air from passing therethrough.

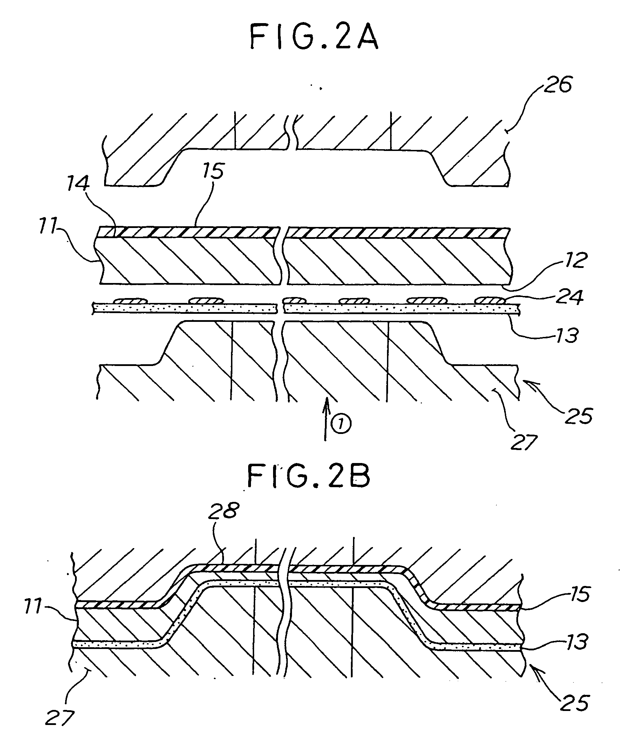

Discussion is made as to how the ceiling member 10A is molded using a mold assembly 25 as shown in Fig. 2A and Fig. 2B.

Initially, glass fibers and polypropylene resin are mixed together to prepare the substrate 11, after which the unventilated film 15 is applied onto the back surface 14 of the substrate 11. The substrate 11 having the film 15 applied thereto is then heated to expand the glass fibers. The substrate 11 is thus expanded. The substrate 11 thus arranged is subsequently cooled. Thereafter, adhesive 24 is applied to the covering material 13. The substrate 11 having the film 15 applied thereto and the covering material 13 having the adhesive 24 applied thereto are set within the mold assembly 25, as shown in Fig. 2A.

The mold assembly 25 includes an upper mold 26 and a lower mold 27. The mold assembly 25 can perform trimming, punching, and machining operations on the substrate 11 and the covering material 13 set therewithin. The mold assembly 25 is operated to raise the lower mold 27, as shown by an arrow ① of Fig. 2A.

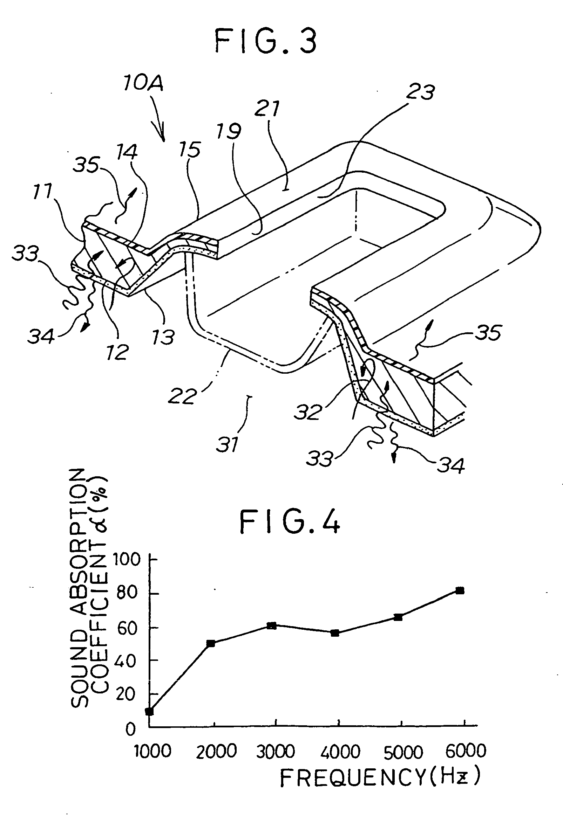

The upper and lower molds 26, 27 compress the covering material 13 and the substrate 11 together, such that the covering material 13 is applied to the substrate 11. At the same time, part 28 of the substrate 11 is compressed to provide a hermetic part. The hermetic part is then punched to define the opening 23 (see Fig. 3). Accordingly, the unventilated edge 19 defining the opening 23 is formed. An edge (not shown) of the substrate 11 is also compressed using the mold assembly 25, thereby providing the hermetic portion 18. Namely, the unventilated edge 17 (see Fig. 1) is molded.

Referring to Fig. 3, the ceiling member 10A includes the substrate 11, the covering material 13 applied to the surface 12 of the substrate 11, and the unventilated film 15 applied onto the back surface 14. The unventilated edge 19 of the substrate 11 is the hermetic portion 21, as stated above. More specifically, the unventilated edge 19 of the substrate 11 contains glass fibers held or compressed together in such a manner as to provide no spaces therebetween. Provision of the hermetic portion 21 is advantageous because air 32, which has passed from passenger compartment 31 through the covering material 13 into the substrate 11, does not flow through the hermetic portion 21. It is to be understood that the hermetic portion 18 prevents the flow of air therethrough as does the hermetic portion 21.

Since the covering material 13 is applied to the surface 12 of the substrate 11 while the unventilated film 15 is applied onto the back surface 14 of the substrate 11, sound produced within the passenger compartment 31 passes directly into the substrate 11. Little sound 35 passes out of the ceiling member 10A. This means that, with the sound absorption coefficient $\alpha$ maintained constant, the substrate 11 substantially absorbs the sound produced within the passenger compartment 31. As used herein, the sound absorption coefficient $\alpha$ is expressed as follows:

$$\alpha\ (\%) = (Sa - Sb) / Sa * 100$$

where Sa is the loudness of the sound produced within the passenger compartment 31 and having sound waves 33 arriving at the substrate 11 at a given angle of incidence and Sb is the loudness of sound having sound waves 34 reflected by the substrate 11.

Fig. 4 graphically shows the sound absorption coefficient of the ceiling member 10A. The axis of ordinates indicates the sound absorption coefficient of the ceiling member while the axis of abscissas indicates the frequency of the sound wave. A ceiling member having any part that is not yet rendered unventilated also exhibits the sound absorption coefficient as shown in Fig. 4. In other words, the sound absorption coefficient does not depend upon whether or not the ceiling member includes hermetic portions containing glass fibers held or compressed together in such a manner as to provide no spaces formed therebetween.

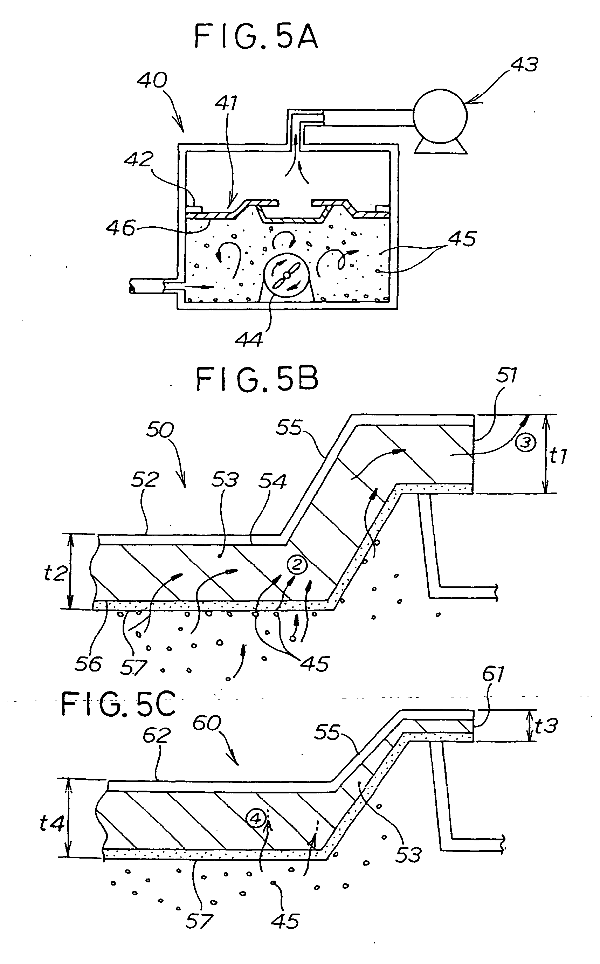

Ventilation characteristics of ceiling members 50, 60 shown in Figs. 5B and 5C, respectively, were evaluated using a ventilation test apparatus 40 as shown in Fig. 5A. The apparatus 40 includes a mounting portion 42 to which a sample 41 (i.e., either of the ceiling members 50, 60) to be evaluated is attached, and a fan 44. The apparatus 40 is connected to a device 43 for drawing air out of the apparatus 40.

With the sample 41 mounted to the mounting portion 42, the device 43 is operated to draw air out of the apparatus 40 while the fan 44 is operated to raise dust 45, as shown in Fig. 5A. Under such a condition, a judge visually checks whether a surface 46 of the sample 41 is dirtied. More specifically, she checks to see if the dust 45 clings to the surface 46. If the dust 45 clings to the surface 45, she considers the sample 41 to have the ventilation characteristic. In other words, the sample 41 is considered to be ventilative.

In relation to Fig. 5B, the ceiling member 50 has an edge 51 of thickness t1. The thickness t1 is 5mm. A portion 52 other than the edge 51 also has a thickness t2 of 5mm. The edge 51 is ventilative.

To mold the ceiling member 50, a 100-$\mu$m-thick film 55 of polypropylene (PP) was initially applied to a back surface 54 of a substrate 53 containing 50 % by weight of glass fibers. The substrate 53 thus arranged was then heated to a temperature of 200 °C. The substrate 53 was held at 200 °C for 120 seconds to expand the glass fibers. The substrate 53 was thus expanded. The substrate 53 was subsequently cooled, after which adhesive was applied to a surface 56 of the substrate 53 positioned opposite from the back surface 54. A covering material 57 and the substrate 53 were set within a mold. The mold is operated such that the covering material 57 adheres to the surface 56 to thereby provide the ceiling member 50. The ceiling member 50 is punched to provide the edge 51.

The ceiling member 50 was then set within the apparatus 40 for evaluation of the ventilation characteristic. As a result, the covering material 57 was found to be dirty. That is, the dust 45 clung to the covering material 57. The result indicates that the air passes through the covering material 57 into the substrate 53 and flows out of the edge 51, as shown by arrows ②, ③ of Fig. 5B.

As shown in Fig. 5C, the ceiling member 60 provided in accordance with the present invention has an unventilated edge 61 of thickness t3. The thickness t3 is 2.5mm. A portion 62 other than the edge 61 has a thickness t4 of 5mm. The unventilated edge 61 is formed in the manner as described above. Except that the edge 61 is rendered unventilated, the ceiling member 60 is molded in the same manner as the ceiling member 50.

The ceiling member 60 was set within the apparatus 40 for evaluation of the ventilation characteristic. As a result, it was found that the covering material 57 was not dirtied. Namely, the covering material 57 had no dust 45 clung thereto. The result shows that air, which has passed through the covering material 57, is prevented from flowing through the substrate 53, as shown by an arrow ④ of Fig. 5C. This means that harmful flow of air through the substrate 53 is not produced.

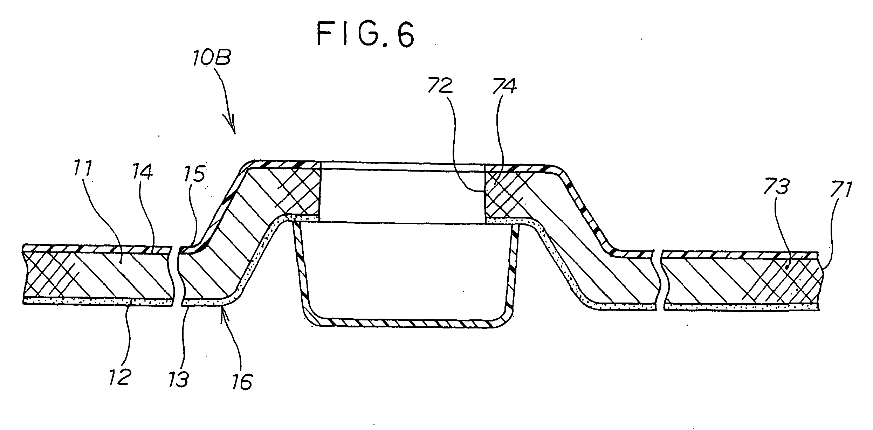

Fig. 6 shows an alternative to the ceiling member 10A. A ceiling member 10B is comprised of the laminate 16 including the substrate 11, the covering material 13 applied to the surface 12, and the unventilated film 15 applied to the back surface 14. The substrate 11 includes unventilated edges 71, 72. More specifically, the edges 71, 72 are rendered unventilated because they are coated or otherwise impregnated with resins 73, 74. With this arrangement, air is not permitted to flow through the edges 71, 72.

Provision of the unventilated edges 71, 72 makes it possible to stop the harmful flow of air through the substrate 11 without requiring any major change to the design of the ceiling member.

The present invention has been described as being applied to the ceiling member having the opening 23 for the interior roof lamp, however, it may be altered such that the ceiling member has an opening for a sunroof.

The substrate 11, the covering material 13, and the unventilated film 15 may be formed of a variety of other materials to provide their respective characteristics as stated above.


**Claims**

1.  A ceiling member (10) for an automobile interior, comprising:

> - an air permeable sound absorption substrate (11),
> - an air permeable covering material (13) applied to a front surface (12) of said sound absorption substrate (11),
> - an air impermeable film (15) arranged on a back side of said sound absorption substrate (11),

> **characterized in that** the air impermeable film (15) is applied to a back surface (14) of said sound absorption substrate (11) and **in that** said sound absorption substrate (11) has air impermeable edges (17, 19, 71, 72).

2.  A ceiling member for an automobile interior as claimed in claim 1, wherein said edges (17, 19) are compressed hermetic portions (18, 21).

3.  A ceiling member for an automobile interior as claimed in claim 1, wherein said edges (71, 72) are impregnated with resins (73, 74).

4.  A ceiling member for an automobile interior as claimed in anyone of the preceding claims, wherein the sound absorption substrate (11) is formed by heat expanding a mixture of glass fibres and polypropylene resin having the air impermeable film (15) applied to a back side thereof.

5.  A ceiling member for an automobile interior as claimed in anyone of the preceding claims, wherein an opening (23) for an interior roof lamp is defined by an air impermeable edge (19).


**Patentansprüche**

1.  Dachverkleidungselement (10) für den Innenraum eines Kraftfahrzeugs, umfassend:

    - ein luftdurchlässiges Schalldämmungssubstrat (11),
    - ein luftdurchlässiges Beschichtungsmaterial (13), das auf eine vordere Fläche (12) des Schalldämmungssubstrats (11) aufgetragen ist,
    - eine luftundurchlässige Folie (15), die auf einer hinteren Seite des Schalldämmungssubstrats (11) angeordnet ist,

    **dadurch gekennzeichnet, dass** die luftundurchlässige Folie (15) auf eine hintere Fläche (14) des Schalldämmungssubstrats (11) aufgebracht ist und dadurch, dass das Schalldämmungssubstrat (11) luftundurchlässige Ränder (17, 19, 71, 72) aufweist.

2.  Dachverkleidungselement für den Innenraum eines Kraftfahrzeugs nach Anspruch 1, wobei die Ränder (17, 19) zusammen gepresste hermetische Teile (18, 21) sind.

3.  Dachverkleidungselement für den Innenraum eines Kraftfahrzeugs nach Anspruch 1, wobei die Ränder (71, 72) mit Harzen (73, 74) durchtränkt sind.

4.  Dachverkleidungselement für den Innenraum eines Kraftfahrzeugs nach einem der vorangehenden Ansprüche, wobei das Schalldämmungssubstrat (11) durch Heißexpandieren einer Mischung aus Glasfasern und Polypropylenharz gebildet ist, wobei die luftundurchlässige Folie (15) auf eine hintere Seite davon aufgebracht ist.

5.  Dachverkleidungselement für das Innere eines Kraftfahrzeugs nach einem der vorangehenden Ansprüche, wobei eine Öffnung (23) für eine Dachinnenbeleuchtung durch einen luftundurchlässigen Rand (19) begrenzt ist.


**Revendications**

1.  Élément de plafond (10) pour un intérieur d'automobile, comprenant :

    - un substrat d'absorption acoustique perméable à l'air (11),
    - un matériau de revêtement perméable à l'air (13) appliqué sur une surface avant (12) dudit support d'absorption acoustique (11),
    - un film imperméable à l'air (15) disposé sur une face arrière dudit support d'absorption acoustique (11),

    **caractérisé en ce que** le film imperméable à l'air (15) est appliqué sur une surface arrière (14) dudit substrat d'absorption acoustique (11) et **en ce que** ledit substrat d'absorption acoustique (11) présente des bords imperméable à l'air (17, 19, 71, 72).

2.  Élément de plafond pour un intérieur d'automobile selon la revendication 1, dans lequel lesdits bords (17, 19) sont des parties hermétiques comprimées (18, 21).

3.  Élément de plafond pour un intérieur d'automobile selon la revendication 1, dans lequel lesdits bords (71, 72) sont imprégnés de résines (73, 74).

4. Élément de plafond pour un intérieur d'automobile selon l'une quelconque des revendications précédentes, dans lequel le substrat d'absorption acoustique (11) est formé en procédant à l'expansion thermique d'un mélange de fibres de verre et de résine de polypropylène, le film imperméable à l'air (15) étant appliqué sur sa face arrière.

5. Élément de plafond pour un intérieur d'automobile selon l'une quelconque des revendications précédentes, dans lequel une ouverture (23) pour un plafonnier intérieur est définie par un bord imperméable à l'air (19).

# FIG.1

# FIG.2A

# FIG.2B

# FIG. 3

# FIG. 4

SOUND ABSORPTION COEFFICIENT α(%)

FREQUENCY(Hz)

# FIG.5A

# FIG.5B

# FIG.5C

FIG.6

EP 1 172 200 B1

FIG.7
(PRIOR ART)

100
101
102
103
104
105
⑦

FIG.8
(PRIOR ART)

100
101
102
103
104
105
106
107
108
⑧
⑧

12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4630707 A